Europäisches Patentamt

European Patent Office

Office européen des brevets

(19)

(11) Publication number: **0 179 750**
**A2**

# (12) EUROPEAN PATENT APPLICATION

(21) Application number: **85850344.4**

(22) Date of filing: **28.10.85**

(51) Int. Cl.⁴: **H 04 Q 1/14**

(30) Priority: **26.10.84 US 664990**

(43) Date of publication of application:
**30.04.86 Bulletin 86/18**

(84) Designated Contracting States:
**AT BE CH DE FR GB IT LI LU NL SE**

(71) Applicant: **ADC TELECOMMUNICATIONS, INC.**
**4900 West 78th Street**
**Minneapolis Minnesota 55435(US)**

(72) Inventor: **Dewey, James D.**
**2351 3rd Street N.W.**
**New Brighton Minnesota 55112(US)**

(72) Inventor: **Gonier, Larry W.**
**4867 Bryce Ave. E. Inven Grove Hgts.**
**Minneapolis Minnesota 55075(US)**

(72) Inventor: **Pohl, Karl H.**
**Route 4 Box 127**
**Buffalo Minnesota 55313(US)**

(74) Representative: **Ström, Tore et al,**
**Ström & Gulliksson AB Studentgatan 1 P.O. Box 4188**
**S-203 13 Malmö(SE)**

(54) **Modular distribution frame.**

(57) A distribution frame for use in telecommunications to interconnect equipment and distribution lines is disclosed. The distribution frame is selectively configurable to provide a varible number of terminations or protection circuits and includes a frame having on the front side thereof a plurality of mounting positions each for receiving and demountable supporting a termination module. Each termination module includes a termination panel having symmetrical first and second generally planar portions spaced apart at a rear end of the module and extending forward and toward one another to a front end. The panels have mounted thereon a plurality of double-ended insulation displacement connectors with the opposite ends extending on opposite faces of the panel. A rear module panel includes a plurality of fifty-pin connectors wired to the double-ended connectors. The frame may be configured to demountably support a plurality of overvoltage protection panels on the rear side thereof, with the ports to the overvoltage protection circuits provided by fifty-pin connectors such that incoming or outgoing lines may be routed through the protection circuits and the protection circuits may be coupled to the termination modules via cables.

./...

FIG. 1

MODULAR DISTRIBUTION FRAME

## Technical Field of the Invention

The present invention pertains generally to the field of telecommunications, and more particularly to distribution frames for distributing or cross-connecting telecommunication lines.

## Background of the Invention

Distribution frames are widely used in the telecommunications industry to interconnect equipment and distribution lines. At this time standard or typical distribution frames at a minimum consist of a planar field or array of connection terminals such as wire wrap posts or insulation displacement terminals. The terminals are mounted on the front of the frames on flat sheet metal members such that lines entering or leaving the distribution frame may be connected directly to the terminals via the rear side of the frame with distribution or cross-connection between the terminals effected from a front side. Distribution frames may also include "protection", which is provided by overvoltage protection circuits through which lines exposed to environmental hazards such as lightning may be routed to protect electrical equipment interfaced with the lines.

Distribution frames of the above described type have certain limitations or disadvantages. For one, termination capacity is for the most part dictated by the surface area of the planar front connection array of the frames. Thus, for a given terminal density increasing termination capacity requires an increase in the length or width of the frame array, which increases the average or mean length of wire runs between terminations. An increase in the mean length of wire runs raises both material costs and the average time required to make a cross-connection, both of which consequences are clearly undesireable.

Moreover, the alternative of increasing capacity by raising termination density can be just as undersireable; too dense an array can lower clearance and make connections difficult to accomplish. Also, the protection circuit capacity of standard distribution frames is normally fixed such that it cannot be conviently altered to meet the needs of each individual application. Finally, some frames do not permit ready reconfiguration of the termination array capacity, such that underutilization of distribution frames is common.

## Summary of the Invention

In response to the above-identified limitations and disadvantages of typical distribution frames the present invention provides a reconfigurable distribution frame which generally provides an upright frame for supporting a variable number of wire termination modules. The frame includes on a front side thereof a plurality of mounting positions each for receiving and demountably supporting one of the modules. Each of the modules includes a termination panel having an inward and outward side, with the outward side accessible for cross-connection wiring when the modules are mounted. The panel projects outwardly from a rear mounting end of the module and includes a plurality of double-ended wire connecting means mounted to extend therethrough with one end accessible on each of the sides of the panel. Each of the connecting means provides a conductive path between its inward and outward ends with the inward ends for connection to incoming or outgoing cables generally routed through the frame and the outward ends for connection to cross-connection or distributing wires.

Thus, according to this aspect of the invention, the wire distribution frame may be selectively configured to meet the termination needs of the user.

According to another aspect of the invention the termination panel of each module includes at least two generally planar portions which are proximate one another at a front end of the module and diverge from one another toward the rear mounting end of the module so that the module has a generally triangular cross section, thereby providing for greater termination density without increasing the height and length of the distribution frame. Preferably, the planar portions diverge from one another at a first angle to a point proximate two-thirds the length of each portion, and then diverge from one another at a more severe angle to the rear of the connection module such that wire installation on facing panel portions of adjacently mounted modules is facilitated.

According to yet another aspect of the invention each of the modules include a rear panel including one or more multipin mating connectors, with one side of the mating connectors for connection to the inward ends of the connecting means and the other side of the connectors for detachably mating to multipin connectors providing terminations for incoming or outgoing cables.

According to still another aspect of the invention the rear of the frame includes means for hingeably mounting a plurality of overvoltage protection modules with the incoming and outgoing ports for the modules provided by multipin mating connectors, such that incoming or outgoing lines may be terminated in a multipin connector and readily coupled to the overvoltage protection circuits or such that the overvoltage
protection circuits may be readily coupled to the termination modules via cables preterminated on each end
with multipin mating connectors.

According to yet another aspect of the invention overvoltage protection terminations for incoming
and outgoing lines may be provided on termination modules configured to include an overvoltage protection
panel for coupling lines through overvoltage protection
circuits. The overvoltage protection panel is preferably wired to multipin mating connectors on the rear
panel of the module such that cables may be detachably
coupled thereto. The protected sides of the overvoltage
protection circuits are wired to the inward sides of the
double-ended connecting means on the termination panel.

The distribution frame according to the
present invention as described above thus provides for
selective configurability according to the individual
requirements of each application. In addition, the
distribution frame according to the present invention
facilitate reconfiguration when necessary. Moreover,
the three dimensional design of the termination modules
provides for an increase in termination density without
the need for increasing the height and length of the
frame thereby providing higher density without the
expense of increasing the average length of wire runs
between terminals. These and other salient features of
the invention, together with the more subtle aspects,
are described below in more detail in the following specification and drawings.

Brief Description of the Drawings
FIGURE 1 is a perspective view of the wall mountable embodiment of the modular distribution frame according to the present invention;

FIGURE 2 is a plan view of a termination module with a portion of the top broken away;

FIGURE 3 is a plan view of a termination module including overvoltage protection circuits with a portion of the top thereof broken away;

FIGURE 4 is a perspective view of a multipin mating connector utilized in the present invention;

FIGURE 5 is a perspective view of a double-ended insulation displacement connector and a portion of a panel of a termination module according to the present invention;

FIGURE 6 is a perspective view of the freestanding frame embodiment of the wire distribution frame according to the present invention;

FIGURE 7 is a rear perspective view of the frame of FIGURE 6; and

FIGURE 8 is an exploded perspective view of the wire distribution frame of FIGURES 6 and 7 according to the present invention.

### Detailed Description of the Invention

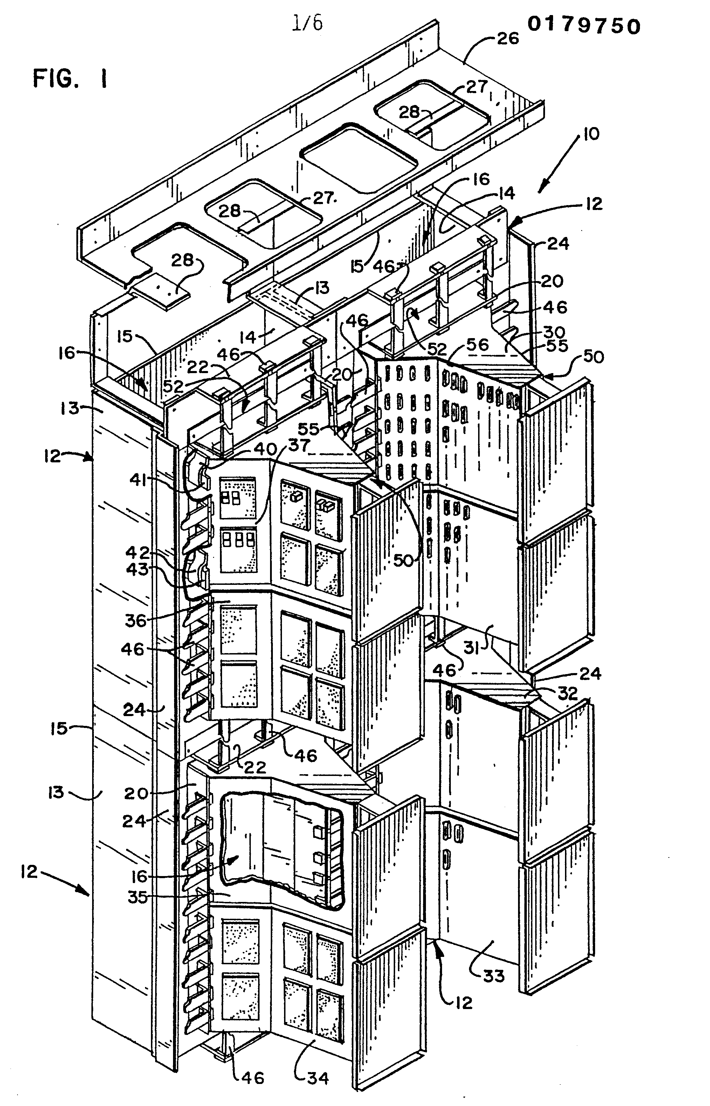

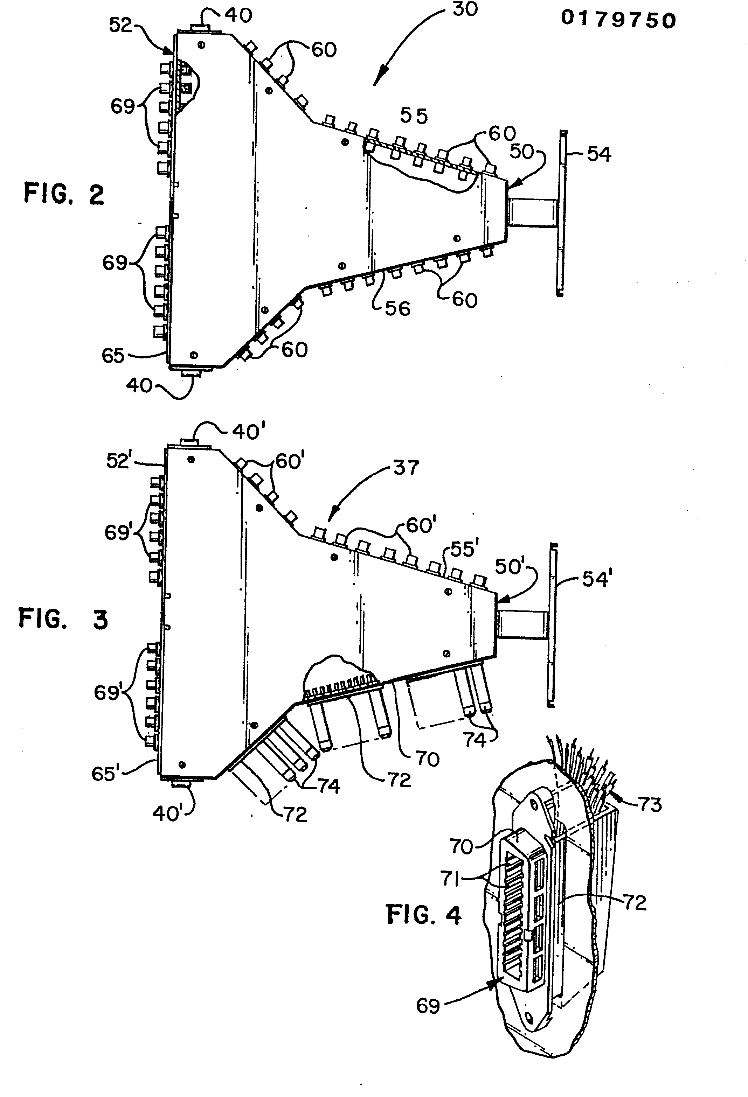

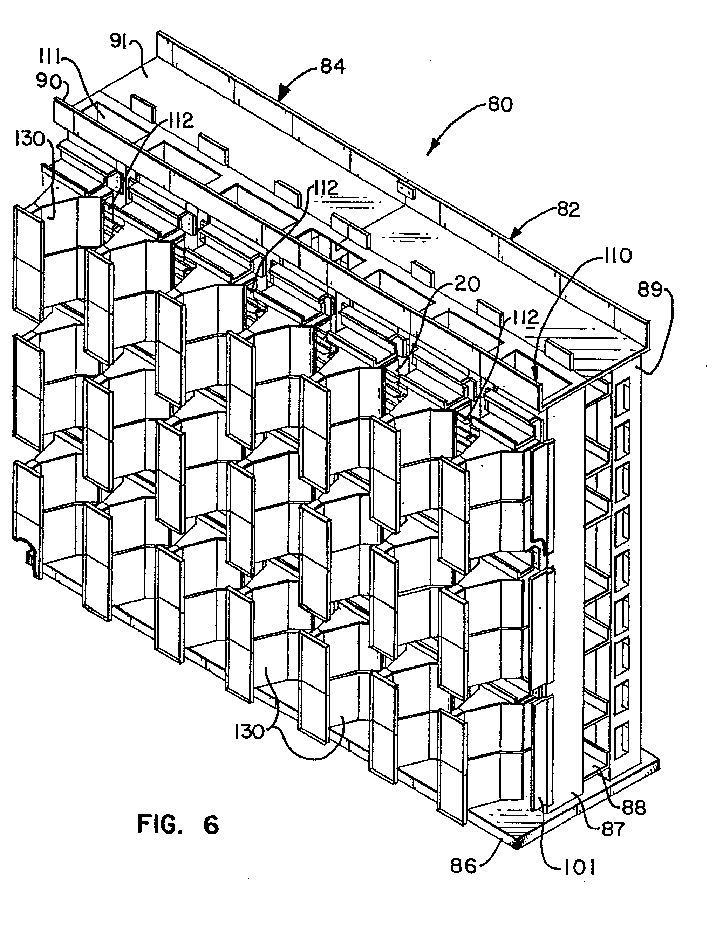

There is shown and described herein two embodiments of the wire distribution frame according to the present invention. A wall mountable embodiment is shown with respect to FIGURE 1 and a free standing embodiment is shown with respect to FIGURES 6-8. The wall mountable and free standing embodiments have various features in common, particularly the demountable "termination" modules, which may best be seen with reference to FIGURES 1-5.

Referring first to FIGURE 1, the wall mountable distribution frame 10 according to the present invention comprises one or more generally rectangular frames 12. The distribution frame 10 shown in FIGURE 1 includes four frames 12 each of which may support up to two termination modules. For instance, the frame 12 in the upper left hand corner supports modules 36 and 37. Each of frames 12 includes sidewalls 13 and 14, and a rear wall 15, which define a vertically extending open-faced channel 16. Frames 12 further include flange members 20 extending forward from the front sides thereof on which modules 30-37 may be hung. For this purpose each of flange members 20 include a pair of brackets for receiving hangers disposed on opposite sides of modules 30-37, as illustrated with respective to the left side of module 37 and mating hangers and brackets 40-43. Accordingly, termination modules may be demountably hung on frames 12, permitting each of frames 12 to be selectively configured with either one or two modules. Moreover, the number of frames 12 provided may be varied such that module capacity may be varied in increments of two. Each of frames 12 are preferably dimensioned to be approximately two and one-half feet tall, one and one-half feet wide and one foot deep (excluding the depth of termination modules).

Also disposed on flanges 20 are a plurality of flexible wire retainer clips 46. As shown with respect to the flanges 20 disposed on adjacent frames 12 along the center of distribution frame 10, the clips 46 are provided in two complimentary forms such that when interfaced with each other they define wire guide channels. Along the outer sides of frames 12 flanges 24 may be provided to interface with clips 46 to provide wire guide channels. Thus, where frames 12 are mounted side-by-side a wire channel may be formed with clips 46 mounted on the opposing flanges 20 of the adjacent frames. Wires may be fed between or around the clips during installation whereafter they are retained therebehind. Additional flanges 22 are provided, from which additional clips 46 may be disposed, to provide horizontal wire guide channels. Certain of flanges 22 have to be demounted in order to mount or demount quick-connection modules. Preferably, clips 46 are molded of plastic, and are configured to snap-on complimentary cutouts on flanges 20 and 22. Thus, it shall be seen that clips 46 provide contained channels for wires interconnected between the outward sides of modules 30-37. Also included in frame 12 is cable duct or guide member 26 which is mounted above distribution frame 10 via brackets 28. Member 26 provides cable support ducts 27 through which cables may be directed to the channels 16.

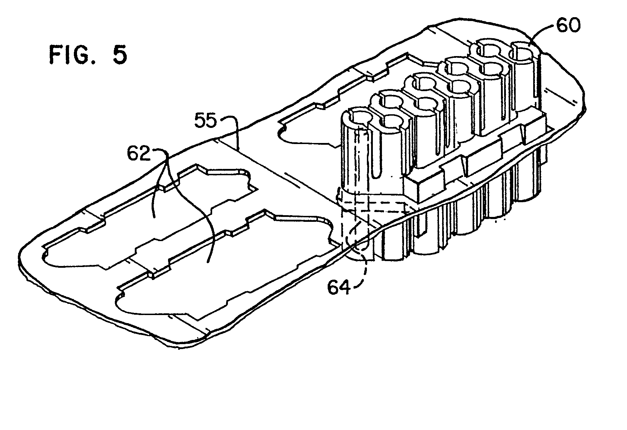

As may be seen better with further reference to FIGURES 2 and 3, termination modules have two possible configurations. A first module configuration is best understood with reference to FIGURE 2, which is a plan view showing the construction of module 30, which is identical to modules 31-33. A second module configuration is best understood with reference to FIGURE 3, which is a plan view of the construction of module 37, to which modules 34-36 are identical. Although distribution frame 10 is shown with an equal number of each type of module it shall be understood that any combination thereof may be used to satisfy the requirements of various configurations.

Referring to FIGURES 1 and 2, module 30 is generally prismatic in shape and has a front end 50 and a rear end 52. When mounted on frame 12, rear end 52 faces toward the cable channel 16, with the front end 50 extending or projecting forward and away from the rear of the frame 12. Front end 50 includes a wiring table support member 54 and a termination panel including oppositely facing panel portions 55 and 56. Panel portions 55 and 56 diverge away from each other toward the rear end of module 30 at a first angle for about two-thirds their lengths and then diverge at a greater or more severe angle for the rest of their length. As may be best understood with reference to FIGURE 1, this panel shape provides for good access to the entire face of panels facing each other along the center of distribution frame 10, so that quick-connect wiring may be accomplished without interference. Panel portions 55 and 56 are preferably constructed from sheet metal, and each include a plurality of double-ended insulation displacement connectors 60 mounted in apertures punched from the sheet metal. Alternatively, portions 55 and 56 may be constructed from plastic. Preferably, 600 terminations are provided by sixty double-ended connectors on each panel portion. Each of connectors 60 include 10 terminations, such that 300 pairs of quick-connect terminations are provided on each panel portion, for a total of 600 pairs per module.

Referring to FIGURE 5, one of the double-ended connectors 60 is shown in some detail, together with an illustration of the apertures 62 in which the displacement connectors are mounted to the panel portions 55 and 56. Each of connectors 60 have two ends, each of which are substantially symmetrical. One end of the connector is disposed on an inward side of the panel and the other end on the outward side. Each of connectors 60 provide 10 individual insulation-displacement wire connection terminals, with each terminal including a split-cylinder conductor extending between the ends of the connector as shown with respect to split-cylinder 64. Split cylinder 64 may make a quick-connection via insulation displacement to one or more wires on either end, and provide a conductive path between wires mounted on opposite or same ends. Details of a double-ended connector such as connector 60 may be seen in co-pending application serial no. 658,268 entitled "Electrical Connector Module with Multiple Connector Housings", filed October 5, 1984, by Pohl.

The rear end 52 of module 30 includes a further panel 65 provided with a plurality of multipin mating connectors 69, as for example shown in FIGURE 4. Such connectors are generally known in the trade as fifty-pin connectors, and as shown in FIGURE 4 generally include a first coupling or mating end 70 including a plurality of contacts 71 which may be engaged with a complimentary mating multipin connector. On a rear end 72 of connector 69 each of contacts 71 are connected to wire bundle 73 exiting from the rear of the connector.

In the preferred embodiment of module 30, the total number of wire connection terminals provided by double-ended connectors 60 corresponds to the total number of contacts 71 provided by multi-pin connectors 69. Preferably, twenty-four fifty-pin connectors are utilized to terminate the 600 pairs of terminators provided on each of modules 30. This permits, preferably, each of contacts 71 to be prewired via wire bundle 73 to a terminal in one of double-ended connectors 60, such that there is provided a conductive path between each one of the quick-connect terminals (accessible on the outward side of panel portions 55 and 56 for cross-connection etc...) and one of contacts 71 on the rear panel. Thus, cables connected to telecommunications equipment and such may be coupled to the rear multipin connectors of modules 30-33 via cable ducts 26 and channels 16 so that interconnection of the various lines or wires of the cables may be effected from the outwardly facing termination panels of the modules via the quick-connection connectors 60.

Referring to FIGURES 1 and 3, there may be seen the other module configuration, i.e. module 37. Module 37 is substantially similar to module 30, and like elements are identified with like primed-numerals. Module 37 includes a rear portion 52' including a panel member 65' having mounted thereon a plurality of multi-pin connectors 69', and a front end 50' including a wiring table 54' and a panel portion 55' having mounted thereto a plurality of double-ended connectors 60'. However, panel portion 70 differs from panel portion 56 as instead of providing a plurality of double-ended connectors, it has mounted thereon a plurality of overvoltage protection circuit receptacle blocks 72 into which will be plugged a plurality of overvoltage protection circuits 74 (such circuits are generally termed "modules" in the trade). Preferably, there are provided six blocks, each of which may route twenty-five wire pairs or lines through protection circuits 74, such that a plurality of lines may be protected by each module. Such receptacle blocks and overvoltage protection circuits 74 are well known in the art, and thus are not shown in detail. Briefly, in the case where overvoltage protection is desired for isolating equipment from distribution lines exposed to environmental hazards such as lightning the lines may be routed through protection circuits 74 before being distributed to further equipment as in the case where the lines are received from the outside, or lines may be routed through protection circuits 74 when they are to be exiting to the outside.

Preferably, module 37 is pre-wired to provide conductive paths from each of the contacts of multipin connectors 69' to a socket terminal on the back panel of a receptacle block 72, through an overvoltage protection circuit 74, and from the corresponding socket terminal on the other side of a circuit 74 to a terminal of double-ended connectors 60'. In case of overvoltage the incoming lines are shunted to a grounding terminal provided in each overvoltage protection circuit, which terminals are wired to a grounding plate (not shown) on the rear panel of the modules. The grounding plate is connected to a grounding window on the frames 12 from where it is routed to a good building ground. In this manner, incoming wires may be protection terminated by routing them through multipin connectors 69' and overvoltage protection circuits 74 to double-ended connectors 60', from which the protected lines may be distributed or cross-connected. Or, outgoing wires may be routed in a reverse fashion.

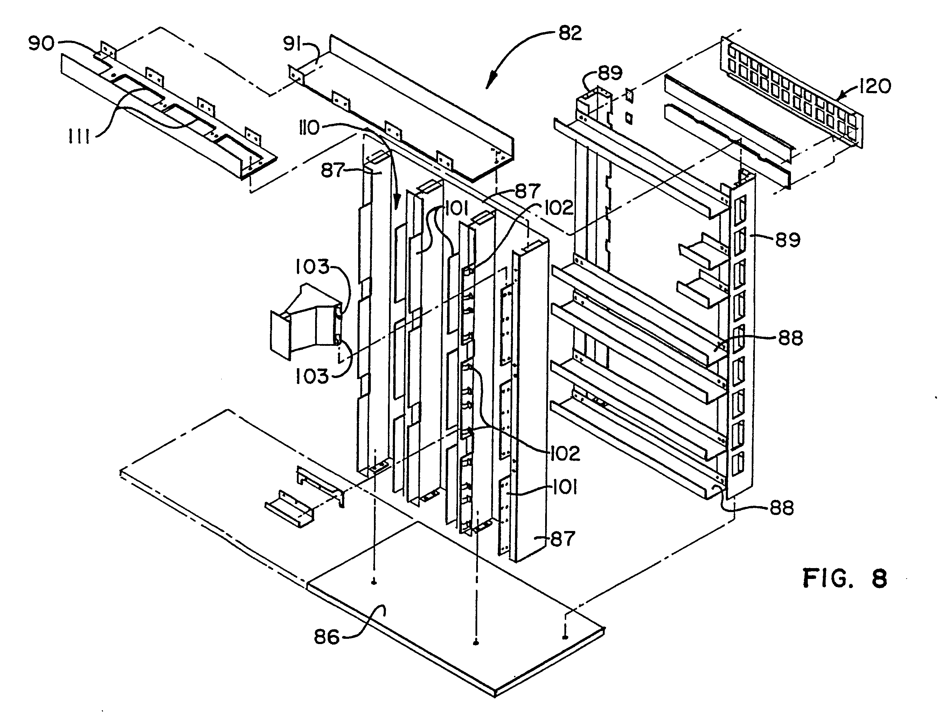

Referring now to FIGURES 6, 7 and 8, the freestanding embodiment 80 of the distribution frame according to the present invention will be described. Distribution frame 80 generally comprises first and second substantially independent frames 82 and 84 each of which may be utilized alone to support three columns of termination modules 130 (shown without detail for the sake of brevity in the drawing), or which, as shown in FIGURE 6, may be juxtaposed in order to support seven columns of modules, with the center column of modules 130 being supported by both frames. Each of frames 82 and 84 are preferably dimensioned to be approximately eight feet tall, six feet wide, and two feet deep (excluding the depth of the termination modules). Each of frames 82 and 84, as may be best seen with reference to frame 82 in the exploded view of FIGURE 8, includes a base member 86, vertical module supporting members 87, horizontally extending cable troughs 88, further vertical support members 89 and top cable retainers 90 and 91. Vertical members 87 are of generally the same structure as described above with respect to frame 12, including sidewalls (13 and 14 of frame 12) and a rear wall (15 of frame 12). Likewise, members 87 include flanges 101 including brackets 102 for slideably receiving hangers 103 of quick-connection modules. Similarly, members 87 provide wire channels 110 extending from the top to the bottom of the frame, which channels may be accessed through apertures 111 of cable retainer 90. Furthermore, wire guide clips 112 may be provided on the various flanges of the frame in the same manner as described above with regard to clips 46 of frame 12, providing contained paths for wires connected between the outward sides of modules 130. Thus, the front portion of distribution frame 80 is substantially similar to that of the wall mountable embodiment 10, providing for selective capacity configuration with termination modules. In its preferred application, distribution frame 80 is configured with termination modules 130 of the same design as that described above with respect to modules 30.

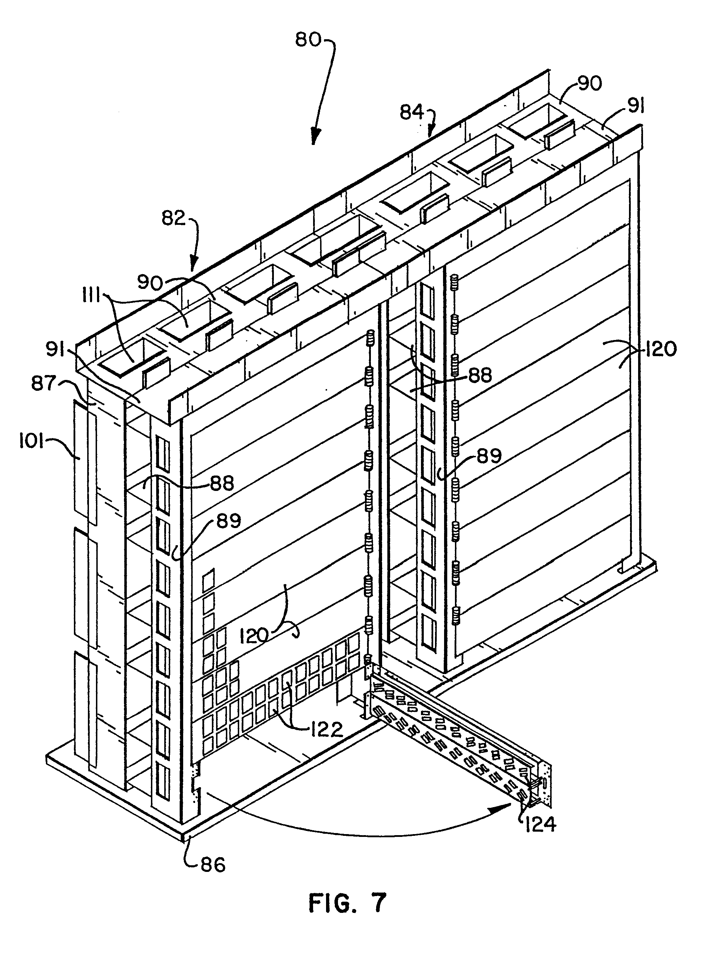

As may be best seen with respect to FIGURE 7, the rear side of distribution frame 80 may be adapted for the hingeable mounting of a plurality of overvoltage protection modules or panels 120, which are employed for line protection in the alternative to protection modules such as module 37 of FIGURE 3. As shown, up to eighteen overvoltage protection panels may be hingeably mounted to the rear of frame 80, each of which include twenty-four protection receptacle blocks, such that up to 10,800 lines may be protected.  Each of panels 120
includes a plurality of overvoltage receptacle blocks
122 of the same design as those described above with
respect to FIGURE 3.  Preferably, each panel 120 includes twenty-four protection receptacle blocks, such that
600 lines may be protected by each of panels 120.

On the rear or inward side of each panel 120
there is provided a plurality of multipin connectors 124
such as described with respect to FIGURE 4.  Preferably,
multipin connectors 124 are wired to receptacle blocks
122 to provide input and output ports.  More specifically, corresponding contacts between the input and output ports are wired to opposite sides of a protection
circuit socket on the receptacle blocks 122.  Thus,
incoming or outgoing cables (multiple lines) may be
quickly coupled through overvoltage protection circuits
via the multipin connector ports.  Preferably, the
multipin mating connectors 124 are fifty-pin connectors,
such that forty-eight connectors 124 are utilized on the
rear side of each panel 120, with twenty-four of the
connectors providing input ports and twenty-four providing output ports.  Thus, as may be readily appreciated, there is provided a correspondence between the
number of lines which may be protected by each of panels
120 and the number of lines which may be terminated in a
module 130.  Moreover, there is a correspondence between
the number of fifty-pin connectors (twenty-four) provided on the rear panel of each termination module 130
to the number of input or output connectors on the protection panels 120, such that twenty-four cables may be
employed to connect a protection panel to a termination
module.  Such corresponce thus facilitates selective
configuration of the distribution frame 80.  Grounding of protector blocks is similar to the one described with respect to frame 10.

Referring again to FIGURE 6, it shall be seen that distribution frame 80 is fully configured with 42 termination modules 130, which provide quick-connection terminations for 25,200 wire pairs. Thus, when the rear protection modules are fully configured, it is possible to protect 10,800 lines through panels 120 and route the protected lines to roughly half of termination modules 130, from which the lines may be distributed or quick-connected to the remaining modules 130, which may provide connection to internal equipment via cables coupled to the multipin connectors on the rear panels thereof. Such equipment connection are preferably cables routed to the rear of the modules through channels 110. Thus, like distribution frame 10, frame 80 may be selectively configured for a desired capacity both with respect to the termination modules 130 and the protection panels 120. Moreover, as maintained above, the independent frames 82 and 84 may be implemented independently or together, providing additional configuration flexibility.

As indicated above, modules 130 of distribution frame 80 are of like design to that of the module 30 described with reference to FIGURES 1 and 2. However, in unusual cases protection modules of like design to that of modules 37 may be employed to increase the protection capacity of the frame.

Thus, it will be seen that the above-described distribution frames provide for selective configuration according to the various individual requirements of each application. This flexibility almost certainly results in more efficient distribution frame utilization over non-modular prior art frames, which can effect cost savings in a variety of ways including, for instance, equipment cost and savings in facility floor space. Moreover, the wire distribution system of the present invention permits easy reconfiguration and the design of the termination modules permits the distribution frame of the present invention to achieve high densities of quick-connection terminations while maintaining ease of wire connection to the termination modules.

Although the present invention has been described herein in its preferred form, those skilled in the art will readily appreciate that various modifications may be made thereto without departing from the spirit and scope of the invention as set forth in the claims appended hereto.

WHAT IS CLAIMED IS:

1.     Reconfigurable wire distribution apparatus comprising:

an upright frame for supporting a variable number of wire termination modules, said frame including on a front side thereof a plurality of mounting positions each for receiving and demountably supporting one of said modules; and

each of said modules including a rear mounting end and a termination panel projecting from said rear . end to a front end of said module so that said panel extends away from said frame, said termination panel having an inward side facing inside said module and an outward side facing away from said module and including a plurality of double ended wire connecting means mounted to extend therethrough with one end accessible on each of said sides of said panel, each of said connecting means providing a conductive path between its inward and outward ends with the inward ends for connection to incoming or outgoing wires generally routed through said frame and the inside of the modules and the outward ends for connection to cross connecting or distributing wires.

2.     Wire distribution apparatus according to claim 1 wherein said termination panel comprises a pair of generally planar portions spaced apart at the rear mounting end of said modules and converging toward one another as they project toward the front end of the module so that said module has a generally triangular cross-section.

3.     Wire distribution apparatus according to claim · 2 wherein said generally planar portions converge toward one another at a less severe angle as the portions approach the front end of said module.

4.     Wire distribution apparatus according to claim 1 wherein said termination panel comprises a pair of symmetrical panel portions each including a bend of obtuse angle as measured on the outward sides thereof, said portions spaced apart at the rear end of the module and proximate at the front end of the module to provide a first pair of termination surfaces proximate the rear end of the module which face generally toward the front end of the module and a second pair of termination surfaces proximate the front end of said module which face generally to the sides of said termination module.

5.     Wire distribution apparatus according to claim 1 in which said modules each include a rear panel proximate the rear mounting end thereof, said rear panel including one or more multipin mating connectors, one side of said mating connectors for connection to the inward ends of said connecting means and the other side of said connectors for detachably mating to further multipin connectors for connection to incoming or outgoing cables.

6.     Wire distribution apparatus according to claim 5 wherein the rear side of said frame is configured to permit said frame to be mounted on its rear side to a wall, and wherein said frame includes one or more cable channels intermediate said front and rear sides, said cable channels open to the rear panels of said modules to permit cables to be routed to and from said rear panel multipin connectors through said frame.

7.      Wire distribution apparatus according to claim
1 wherein one or more of said modules includes an overvoltage protection panel for coupling wires terminated
on said termination panel through overvoltage protection
circuits so that said modules may protect incoming or
outgoing lines.

8.      Wire distribution apparatus according to claim
1 further including base means for supporting said frame
upright and a plurality of overvoltage protection modules, said frame including means for demountably supporting said protection modules on a rear side thereof,
each of said overvoltage protection modules for coupling
incoming wires through overvoltage protection circuits
to said termination modules.

9.      Wire distribution apparatus according to claim
8 wherein said overvoltage protection modules include
multipin mating connectors providing an input and output path for wires connected therethrough, and wherein
said termination modules each include a wire distribution panel including one or more multipin mating connectors, one side of said mating connectors for
connection to the rear ends of said connecting means and
the other side of said connectors for detachably mating
to further multipin connectors so that cables terminated on each end to said multipin mating connectors
may be used to interconnect said termination modules
with said protection modules.

10.     Wire distribution apparatus according to claim
9 wherein said frame includes internally a plurality of
horizontally extending cable troughs for supporting cables running to and from said overvoltage protection modules.

11.     Reconfigurable wire distribution apparatus comprising:

an upright frame for supporting a variable number of termination modules, said frame including on a front side thereof a plurality of mounting positions each for receiving and demountably supporting one of said modules; and

each of said modules including two generally planar termination panels spaced apart from one another at a rear mounting end of said module and converging toward one another to a front end of said module so that said panels generally project outwardly from said frame, each of said panels having an inward side facing inside said module and an outward side facing away from said module, said termination panels each including a plurality of double ended wire connecting means mounted to extend therethrough with one end accessible on each of said sides of said panel, each of said connecting means providing a conductive path between its inward and outward ends with the inward ends for connection to incoming or outgoing wires generally routed through said frame and the outward ends for connection to cross-connecting or distributing wires.

12.     Wire distribution apparatus according to claim 11 in which said modules each include a rear panel on the rear end thereof including one or more multipin mating connectors, one side of said mating connectors for connection to the rear ends of said connecting means and the other side of said connectors for detachably mating to further multipin connectors for connection to incoming or outgoing wires.

13.      Wire distribution apparatus according to claim 11 wherein said termination panels converge toward one another at a less severe angle from a point between said front end and said rear end of said module to provide a first pair of termination surfaces proximate the rear end of the module which face generally toward the front end of the module and a second pair of termination surfaces proximate the front end of module which face generally to the sides of said termination module.

14.      Wire distribution apparatus according to claim 12 further including base means for supporting said frame upright and a plurality of overvoltage protection modules, said frame including means for demountably supporting said protection modules on a rear side thereof, each of said overvoltage protection modules for coupling incoming wires through overvoltage protection circuits to said termination modules.

15.      Wire distribution apparatus according to claim 14 wherein said overvoltage protection modules include multipin mating connectors providing an input and output path for wires connected therethrough, and wherein said termination modules each include a wire distribution panel including one or more multipin mating connectors, one side of said mating connectors for connection to the rear ends of said connecting means and the other side of said connectors for detachably mating to further multipin connectors so that cables terminated on each end to said multipin mating connectors may be used to interconnect said termination modules with said protection modules.

16.      Wire distribution apparatus according to claim 12 wherein the rear side of said frame is configured to permit said frame to be mounted on its rear side to a wall, and wherein said frame includes one or more cable channels intermediate said front and rear sides, said cable channels open to the rear panels of said modules to permit cables to be routed to and from said rear panel multipin connectors through said frame.

17.      Wire distribution apparatus according to claim 11 wherein one or more of said modules includes an overvoltage protection panel for coupling wires terminated on said termination panel through overvoltage protection circuits so that said modules may protect incoming or outgoing lines.

18.      Reconfigurable wire distribution apparatus comprising:
         an upright frame for supporting a variable number of termination modules, said frame including on a front side thereof a plurality of mounting positions each for receiving and demountably supporting one of said modules; and
         each of said modules including a termination panel having an inward and outward side, said termination panel including a plurality of double ended wire connecting means mounted to extend therethrough with one end accessible on each of said sides of said panel, each of said connecting means providing a conductive path between its inward and outward ends with the inward ends for connection to incoming or outgoing wires incoming or outgoing wires generally routed through said frame and the outward ends for connection to cross-connecting or distributing wires, each of said modules further including an overvoltage protection panel for coupling said incoming or outgoing wires through an overvoltage protection circuit.

19.    Wire distribution apparatus according to claim 18 in which said modules each include a rear panel including one or more multipin mating connectors, one side of said mating connectors for connection to said overvoltage protection panel and the other side of said connectors for detachably mating to further multipin connectors for connection to incoming or outgoing wires.

20.    Wire distribution apparatus according to claim 18 wherein said termination and protection panels are each generally planar and extend outwardly from a rear end of said modules to a front end of said module, said panels generally orthogonal to the frame supporting surface or floor.

21.    Wire distribution apparatus according to claim 20 wherein said panels are proximate one another at the front end of said module and diverge from one another toward the rear mounting end of said module so that said module has a generally triangular cross-section.

22.    Wire distribution apparatus according to claim 21 wherein said panels diverge from one another at a more severe angle from a point between said front end and said rear end of said module.

FIG. I

0179750

0179750

FIG. 2

FIG. 3

FIG. 4

FIG. 5

FIG. 6

FIG. 7

FIG. 8